# EUROPÄISCHE PATENTSCHRIFT

(11) **EP 2 292 962 B1**
(45) Veröffentlichungstag und Bekanntmachung des Hinweises auf die Patenterteilung: **12.12.2012**
(21) Anmeldenummer: 10196193.6
(22) Anmeldetag: 26.07.2007
(51) Int. Cl.: F16L 13/14, F16L 33/207

(54) **Pressfitting für ein Rohr**
Press fitting for a pipe
Raccord à sertir pour un tuyau

(43) Veröffentlichungstag der Anmeldung: 09.03.2011
(62) Teilanmeldung aus: 07113193.2
(73) Patentinhaber: Uponor Innovation AB, 51381 Fristad (SE)
(72) Erfinder: Kern, Thomas, 97289 Thüngen (DE); Dittmar, Rainer, 97532 Üchtelhausen/Weipoltshausen (DE); Beckmann, Stefan, 46414 Rhede (DE)
(74) Vertreter: Epping - Hermann - Fischer

(56) Entgegenhaltungen:
- EP-A- 1 477 719
- EP-A- 1 538 383
- EP-A- 1 596 116
- EP-A- 1 790 896
- EP-A1- 1 933 073
- DE-B3-102005 028 558

## Beschreibung

Die Erfindung betrifft einen Pressfitting für ein Rohr, bei dem es sich insbesondere um ein Kunststoffrohr oder ein Kunststoff-Metall-Verbundrohr handelt.

Pressfittinge für Rohre weisen im allgemeinen einen Fittingkörper auf, der mit einer Stützhülse versehen ist, auf die das Ende eines anzuschließenden Rohres aufgeschoben wird. Die Presshülse und das auf diese aufgeschobene Rohrende sind dabei von einer plastisch verformbaren Presshülse umgeben, die mittels eines Presswerkzeuges radial gestaucht und damit gegen das Rohr gedrückt wird, so dass dieses am Pressfitting sowohl dicht anliegt als auch fixiert ist.

Es ist ferner bekannt, an der Presshülse (oder am Fittingkörper) ein Anlageelement zur Anlage durch ein Presswerkzeug vorzusehen. Das Anlageelement dient als Anschlag für das Presswerkzeug sowie zur Führung des Presswerkzeuges bei der Verformung der Presshülse.

Schließlich ist es auch bekannt, das Anlageelement mit Verpresskennzeichnungsabschnitten zu versehen, die in den Einwirkbereich der Presshülse hineinragen. Die Verpresskennzeichnungsabschnitte liegen außen an der Presshülse an und werden durch das Presswerkzeug bei der Verformung der Presshülse von dem Anlageelement abgetrennt. Beispiele für Pressfittinge der vorstehend genannten Art finden sich in DE 10 2005 028 558 B3 und EP 1 790 896 A1.

EP 1 933 073 A1 Stand der Technik nach Artikel 54 (3) EPÜ zeigt einen Pressfitting für ein Rohr, bei dem T-,L- und U-förmige Verpresskennzeichnungsabschnitte in den Einwirkbereich der Presshülse hineinragen. Sie sind über Sollbruchstellen mit dem Anlageelement verbunden und werden durch das Presswerkzeug bei der Verformung der Presshülse von dem Anlageelement abgetrennt. Die abgetrennten Verpresskennzeichnungsabschnitte dienen zur Kennzeichnung einer korrekt durchgeführten Verpressung.

Bei der Verformung der Presshülse wirkt das Presswerkzeug mit seiner Pressfläche auf die Verpresskennzeichnungsabschnitte des Anlageelements ein. Dabei werden diese Verpresskennzeichnungsabschnitte radial einwärts gebogen. Bei nicht sachgerechter Handhabung des Pressfittings kann der Fall eintreten, dass sich die Presshülse relativ zum Presswerkzeug axial bewegt, so dass die Verpressung der Presshülse nicht an der vorgeschriebenen Position, wie sie durch Anlage des Presswerkzeuges an dem Anlageelement definiert ist, erfolgt.

Aufgabe der Erfindung ist es, einen Pressfitting für ein Rohr, insbesondere Kunststoffrohr oder Kunststoff-Metall-Verbundrohr zu schaffen, der bei der Verpressung einfacher und zuverlässiger handhabbar ist.

Zur Lösung dieser Aufgabe wird mit der Erfindung ein Pressfitting für ein Rohr, insbesondere Kunststoffrohr oder Kunststoff-Metall-Verbundrohr mit den Merkmlen gemäβ Anspruch 1 vorgeschlagen.

Bei diesem Pressfitting ist erfindungsgemäß vorgesehen, dass der Verpresskennzeichnungsabschnitt zur axialen Fixierung der Presshülse relativ zum Presswerkzeug bei der Verformung der Presshülse eine Führungsvertiefung zur Aufnahme eines Führungsvorsprungs des Presswerkzeuges und/oder einen Führungsvorsprung zur Aufnahme in einer Führungsvertiefung des Presswerkzeuges aufweist.

Der erfindungsgemäße Pressfitting ist mit Ausbildungen versehen, die ein Zusammenwirken des Presswerkzeuges mit dem mindestens einen Verpresskennzeichnungsabschnitt während der Verpressung der Presshülse zur axialen Fixierung von Presswerkzeug und Presshülse ermöglichen. Hierzu weist der mindestens eine Verpresskennzeichnungsabschnitt eine Führungsvertiefung auf, in die ein Führungsvorsprung des Presswerkzeuges, der insbesondere an der Pressfläche des Presswerkzeuges ausgebildet ist, zur axialen Fixierung der Presshülse relativ zum Presswerkzeug bei der Verformung der Presshülse eintaucht. Alternativ ist es möglich, dass die Verriegelung zwischen Presswerkzeug und Presshülse durch Ausbildung eines Führungsvorsprungs an dem mindestens einen Verpresskennzeichnungsabschnitt und einer Führungsvertiefung am Presswerkzeug und insbesondere in dessen Pressfläche realisiert wird. Beide zuvor vorgestellten Lösungen sind als patentrechtlich äquivalent wirkend anzusehen.

Durch die Verhakung bzw. Fixierung des Presswerkzeuges an der Presshülse kann es nun nicht mehr zu einer Relativverschiebung von Presshülse und Presswerkzeug während des Pressvorganges kommen, wenn die Presshülse mit mindestens einem Verpresskennzeichnungsabschnitt versehen ist, auf den das Presswerkzeug zwecks Abtrennung desselben bei dem Verformungsvorgang einwirkt. Diese Maßnahme erhöht die Zuverlässigkeit der Verpressung und vereinfacht die Handhabung des Pressfittings.

Vorteilhaft ist es, wenn der Verpresskennzeichnungsabschnitt mit einer Führungsvertiefung (anstelle eines Führungsvorsprungs) versehen ist. Diese Führungsvertiefung kann nämlich zugleich als Sollbruchstelle zur Abtrennung des Verpresskennzeichnungsabschnitts von dem Anlageelement durch das Presswerkzeug bei Verformung der Presshülse dienen. Für eine Sollbruchstelle ist es zweckmäßig, wenn das mit der Sollbruchstelle versehene Element eine Materialschwächung aufweist. Genau dies wird durch die Einbringung der Führungsvertiefung in den Verpresskennzeichnungsabschnitt realisiert. Zweckmäßig ist es, wenn die Führungsvertiefung als Kerbe ausgebildet ist. In jedem Fall sorgt die Führungsvertiefung für eine Kerbwirkung, was die Abtrennung des Verpresskennzeichnungsabschnitts erleichtert. Demzufolge weist dann also das Presswerkzeug an seiner Pressfläche einen bezüglich der Form der Führungsvertiefung entsprechenden Führungsvorsprung (beispielsweise Rippe oder dergleichen) auf.

Bei der Montage eines Rohres an dem Pressfitting wird im Regelfall derart verfahren, dass das Presswerkzeug axial auf die Presshülse bis zur Anlage mit dem Anlageelement geschoben wird. Von der Anlagefläche des Anlageelements jedoch steht der mindestens eine Verpresskennzeichnungsabschnitt insbesondere mit radialem Abstand zur Presshülse ab. Damit das Bewegen des Presswerkzeuges über den Verpresskennzeichnungsabschnitt bis zur Anlage mit der Anlagefläche des Anlageelements zuverlässiger erfolgt, ist es zweckmäßig, wenn der Verpresskennzeichnungsabschnitt auf seiner der Presshülse abgewandten Außenseite und an seinem der Anlagefläche abgewandten Ende eine Schrägfläche (Auflauffläche) aufweist, über die das Presswerkzeug zur Kontaktierung des Anlageelements bzw. der Anlagefläche des Anlageelements axial bewegbar ist. Durch die Verjüngung des Verpresskennzeichnungsabschnitts an dessen freien Ende lässt sich also das Presswerkzeug auch bei nur geringem radialen Abstand zur Presshülse zuverlässig über diese bis zum Kontakt mit dem Anlageelement bewegen.

Erfindungsgemäß ist der Verpresskennzeichnungsabschnitt in seinem gegen die Presshülse gedrückten Zustand federelastisch. Sobald das Presswerkzeug nach einer Verformung der Presshülse wieder von dieser entfernt wird, löst sich der abgetrennte Verpresskennzeichnungsabschnitt aufgrund seiner Rückstellfähigkeit von der Presshülse und fällt damit zuverlässig von dieser ab, so dass zuverlässig durch Sichtprüfung erkannt werden kann, dass eine Verpressung stattgefunden hat. Die federelastische Verformbarkeit des Verpresskennzeichnungsabschnitts wird durch unterschiedlich weit radial von der Presshülse beabstandete Bereiche des Verpresskennzeichnungsabschnitts realisiert, wobei vorzugsweise keiner der Bereiche an der Außenseite der Presshülse anliegt.

Zur weiteren Vereinfachung der Abtrennung des Verpresskennzeichnungsabschnitts vom Anlageelement ist vorgesehen dass der Verpresskennzeichnungsabschnitt nach Art eines Bogens, also im wesentlichen U-förmig, ausgebildet ist und zwei Schenkel aufweist, die von der Anlagefläche des Anlageelements abstehen und die untereinander durch einen Basisteil verbunden sind. Der Basisteil erstreckt sich dabei im Wesentlichen in Umfangsrichtung der Presshülse, während die beiden Schenkel im Wesentlichen in axialer Richtung der Presshülse verlaufen.

Die Erfindung wird nachfolgend anhand eines Ausführungsbeispiels näher erläutert. Im Einzelnen zeigen dabei:
Fig. 1 einen Halbschnitt durch einen Pressfitting gemäß einem ersten Ausführungsbeispiel und
Fig. 2 eine Ansicht in Richtung des Pfeils II der Fig. 1.

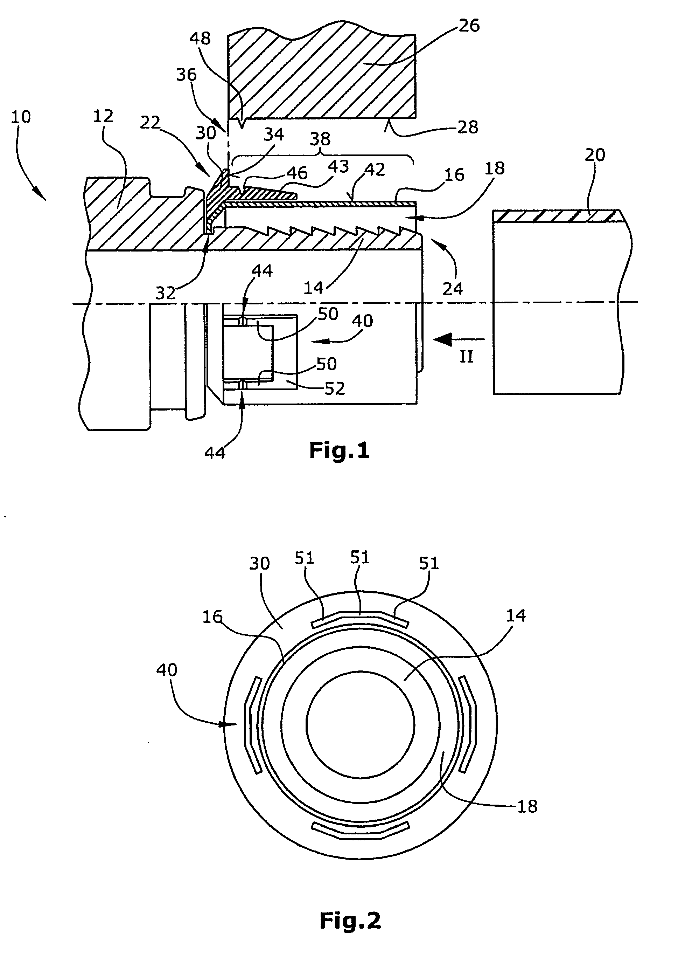

In Fig. 1 ist im Halbschnitt ein Pressfitting 10 dargestellt, der einen lediglich zum Teil gezeigten Fittingkörper 12 aus beispielsweise metallischem Material (Metalllegierung, wie z. B. Messing) mit einer Stützhülse 14 aufweist. An der Stützhülse 14 ist konzentrisch zu dieser eine plastisch verformbare Presshülse 16 aus z. B. einer Aluminiumlegierung oder Edelstahl gehalten, so dass sich zwischen Presshülse 16 und Stützhülse 14 ein Ringraum 18 zur Aufnahme eines anzuschließenden Rohres 20 bildet. Die Stützhülse 14 kann eine profilierte Außenfläche sowie an dieser ein Dichtelement aufweisen.

Die Presshülse 16 weist ein Anlageelement 22 auf, das an dem dem freien Ende 24 der Stützhülse 14 abgewandten Ende derselben angeordnet ist. Das Anlageelement 22 dient zur axialen Anlage und zur Führung eines bei 26 angedeuteten Presswerkzeuges, das eine Pressfläche 28 aufweist, mit der das Presswerkzeug 26 zur Stauchung und plastischen Verformung der Presshülse 16 von außen an dieser angreift. Das Anlageelement 22 ist in diesem Ausführungsbeispiel als Anlagering 30 ausgebildet. Dies ist nicht zwingend erforderlich. So könnte das Anlageelement 22 auch aus einzelnen längs des Umfangs der Presshülse 16 verteilt angeordneten Einzelelementen bestehen. Die Presshülse 16 ist an ihrem dem freien Ende 24 der Stützhülse 14 gegenüberliegenden Halteende 32 in nicht näher zu beschreibender Weise am Fittingkörper 12 vormontiert. Diese Vormontage kann beispielsweise konstruktiv so, wie in DE 10 2005 028 558 B3 beschrieben, realisiert sein.

Der Anlagering 30, der im Regelfall aus Kunststoff besteht, weist eine radial von der Presshülse 16 abstehende Anlagefläche 34 auf, an der das Presswerkzeug 26, wie bei 36 angedeutet, anliegt, wenn die Presshülse 16 verformt wird. Während dieses Verformungsvorgangs wirkt die Pressfläche 28 des Presswerkzeuges 26 innerhalb eines Einwirkbereichs 38 auf die Presshülse 16 von außen ein.

In diesen Einwirkbereich 38 ragen vom Anlagering 30 aus mehrere Verpresskennzeichnungsabschnitte 40 hinein, die von der Anlagefläche 34 des Anlagerings 30 in axialer Erstreckung der Presshülse 16 abstehen und die mit radialem Abstand zur Außenseite 42 der Presshülse 16 angeordnet sowie an ihren dem Ringelement 30 abgewandten Ende verjüngt sind und Schrägflächen 43 aufweisen. Die Verpresskennzeichnungsabschnitte 40, von denen zur Realisierung der Erfindung lediglich einer vorhanden sein muss, sind mit Führungsvertiefungen 44 versehen, die in diesem Ausführungsbeispiel als Kerben 46 ausgebildet sind. In diese Führungsvertiefungen 44 tauchen Führungsvorsprünge 48 des Presswerkzeuges 26 ein. Diese Führungsvorsprünge 48 sind auf der Anpressfläche 28 ausgebildet, wie es in Fig. 1 gezeigt ist.

Bei der Verpressung kommt es nun durch das Zusammenwirken der Führungsvorsprünge 48 mit den Führungsvertiefungen 44 zu einer axialen Fixierung der Presshülse 16 am Presswerkzeug 26, wobei diese axiale Fixierung auch während derjenigen Phase beibehalten bleibt, in der die Verpresskennzeichnungsabschnitte 40 unter Einwirkung des Presswerkzeuges 26 bis zu ihrer Abtrennung im Bereich der Führungsvertiefungen 44 verformt werden. Auf diese Weise ist eine zuverlässige Verpressung der Presshülse 16 an der vorgeschriebenen Stelle und im vorgeschriebenen Ausmaß gegeben, obwohl sich die Verpresskennzeichnungsabschnitte 40 in den Einwirkbereich 38 der Presshülse 16 erstrecken.

Wie anhand von Fig. 1 zu erkennen ist, ist jeder Verpresskennzeichnungsabschnitt 40 im Wesentlichen U-förmig ausgebildet und mit zwei dünnen Schenkeln 50 versehen, die über ein in Umfangsrichtung der Presshülse 16 sich erstreckendes Basisteil 52 miteinander verbunden sind. Die dünnen Schenkel 50 und die Führungskerben 46 sorgen für eine zuverlässige Abtrennung des Verpresskennzeichnungsabschnitts 40 bzw. für dessen Zerstörung bei einem Verpressvorgang.

Während des Verpressvorganges wird, wie oben beschrieben, über die Verpressfläche 28 auf die Verpresskennzeichnungsabschnitte 40 eingewirkt, indem diese gegen die Presshülse 16 gedrückt werden. Dabei besteht die Gefahr, dass die abgetrennten Teile der Verpresskennzeichnungsabschnitte 40 sich von außen in die Presshülse 16 eindrücken. Dies ist insbesondere dann gegeben, wenn die Presshülse 16 aus einem vergleichsweise weichen metallischem Material, wie beispielsweise Aluminium oder eine Aluminiumlegierung, besteht.

Um das selbständige Ablösen der Verpresskennzeichnungsabschnitte 40 von der Presshülse 16 nach der Verformung und nach Abtrennung vom Anlagering 30 zu erleichtern, ist es vorgesehen, dass die Verpresskennzeichnungsabschnitte 40 rückstellfähig sind, nachdem sie gegen die Presshülse 16 gedrückt sind. Durch diese Rückstellfähigkeit wird die Ablösung bzw. Wiederablösung der Verpresskennzeichnungsabschnitte 40 und der Außenseite 42 der Presshülse 16 erleichtert. Die Form der Verpresskennzeichnungsabschnitte 40 zur Realisierung einer Rückstellfähigkeit ist beispielsweise in Fig. 2 zu erkennen. Die Basisteile 52 der Verpresskennzeichnungsabschnitte 40 sind polygonal ausgebildet oder können eine W-Struktur aufweisen, wobei sie sich aus Bereichen 51 zusammensetzen, die unterschiedlich weit radial von der Presshülse 16 beabstandet sind. Indem die Basisteile 52 durch das Presswerkzeug 16 flach gegen die Presshülse 16 gedrückt werden, verformen sie sich elastisch, so dass sich eine Rückstellkraft aufbaut, die die Basisteile 52 sich von der Außenseite 42 der Presshülse 16 ablösen lassen, nachdem das Presswerkzeug 26 wieder von der Presshülse 16 beabstandet ist.

## Patentansprüche

1. Pressfitting für ein Rohr, insbesondere Kunststoffrohr oder Kunststoff-Metall-Verbundohr mit
- einem Fittingkörper (12), der eine Stützhülse (14) aufweist, auf die ein Ende eines anzuschliessenden Rohres (20) aufschiebbar ist,
- einer Presshülse (16), die zum Andrücken eines auf die Stützhülse (14) aufgeschobenen Endes eines anzuschliessenden Rohres (20) gegen die Stützhülse (14) plastisch verformbar ist,
- einem Anlageelement (30) an der Presshülse (16) mit einer Anlagefläche (34) zur Anlage durch ein Presswerkzeug (26) zur plastischen Verformung der Presshülse (16) und
- mindestens einem von der Anlagefläche (34) des Anlageelements (30) abstehenden und abtrennbaren Verpresskennzeichnungsabschnitt (40), der sich außen an der Presshülse (16) bis in einen Einwirkbereich (38) hinein erstreckt, innerhalb dessen das Presswerkzeug (26) die Presshülse (16) bei deren Verformung umschließt,
wobei
- der Verpresskennzeichnungsabschnitt (40) zur axialen Fixierung der Presshülse (16) relativ zum Presswerkzeug (26) bei der Verformung der Presshülse (16) eine Führungsvertiefung (44) zur Aufnahme eines Führungsvorsprungs (48) des Presswerkzeuges (26) und/oder einen Führungsvorsprung (48) zur Aufnahme in einer Führungsvertiefung (44) des Presswerkzeuges (26) aufweist, wobei
- der Verpresskennzeichnungsabschnitt (40) von dem Presswerkzeug (26) bei der Verformung der Presshülse (16) von dem Anlageelement (30) derart abtrennbar ist, dass das Anlageelement (30) an der Presshülse (16) verbleibt,
- der Verpresskennzeichnungsabschnitt (40) im Wesentlichen U-förmig ist und zwei von der Anlagefläche (34) abstehende Schenkel (50) und ein diese verbindendes Basisteil (52) aufweist und dass das Basisteil (52) in polygonaler Form aus unterschiedlich weit radial von der Presshülse (16) beabstandeten Bereichen (51) zusammengesetzt ist.

2. Pressfitting nach Anspruch 1, **dadurch gekennzeichnet, dass** das Basisteil (52) in Struktur ähnlich eines Buchstaben W aus den Bereichen (51) zusammengesetzt ist.

3. Pressfitting nach Anspruch 1 oder 2, **dadurch gekennzeichnet, dass** der Verpresskennzeichnungsabschnitt (40) auf seiner der Presshülse (16) abgewandten Außenseite eine Schrägfläche (43) aufweist, über die das Presswerkzeug (26) zur Kontaktierung des Anlageelements (30) axial bewegbar ist.

4. Pressfitting nach einem der Ansprüche 1 bis 3, **dadurch gekennzeichnet, dass** die Führungsvertiefung (44) als Kerbe (46) ausgebildet ist und dass die Kerbe (46) eine Sollbruchstelle zur Abtrennung des Verpresskennzeichnungsabschnitts (40) oder eines Teils davon durch das Presswerkzeug (26) bei Verformung der Presshülse (16) bildet.

5. Pressfitting nach einem der Ansprüche 1 bis 4, **dadurch gekennzeichnet, dass** der Verpresskennzeichnungsabschnitt (40) in seinem gegen die Presshülse (16) gedrückten Zustand federelastisch verformt ist und unter Ablösung von der Presshülse (16) selbsttätig rückverformbar ist.

6. Pressfitting nach einem der Ansprüche 1 bis 5, **dadurch gekennzeichnet, dass** die radial unterschiedlich weit von der Presshülse (16) beabstandeten Bereiche (51) sämtlich mit radialem Abstand von der Presshülse (16) angeordnet sind.

7. Pressfitting nach einem der Ansprüche 1 bis 6, **dadurch gekennzeichnet, dass** in jedem Schenkel (50) eine Führungsvertiefung (44) ausgebildet ist.

8. Pressfitting nach einem der Ansprüche 1 bis 7, **dadurch gekennzeichnet, dass** die unterschiedlich weit radial von der Presshülse (16) beabstandeten Bereiche (51) innerhalb des Basisteils (52) des Verpresskennzeichnungsabschnitts (40) angeordnet sind.

9. Pressfitting nach einem der Ansprüche 1 bis 8, **dadurch gekennzeichnet, dass** das Basisteil (52) derart mittels des Presswerkzeugs (16) flach gegen die Presshülse drückbar ist, dass das Basisteil (52) mittels einer elastischen Rückstellkraft von der Außenseite (42) der Presshülse (16) ablösbar ist.

10. Pressfitting nach einem der Ansprüche 1 bis 9, **dadurch gekennzeichnet, dass** das Anlageelement (22) als Anlagering (30) ausgebildet ist, der die Anlagefläche (34) aufweist.

## Claims

1. A press fitting for a tube, in particular a plastic tube or a plastic/metal composite tube, comprising
- a fitting body (12) comprising a supporting sleeve (14) over which an end of a tube (20) to be connected can be slipped,
- a pressing sleeve (16) which is plastically deformable for pressing an end of a tube (20) to be connected, slipped over the supporting sleeve (14), against the supporting sleeve (14),
- a contact element (30) provided on the pressing sleeve (16) and comprising a contact surface (34) for being contacted by a pressing tool (26) for plastically deforming the pressing sleeve (16) and
- at least one pressing indicator portion (40) which projects from the contact surface (34) of the contact element (30), can be severed from it, and extends at the outer side of the pressing sleeve (16) as far as into an impact zone (38) within which the pressing tool (26) encloses the pressing sleeve (16) during deformation of the latter,
wherein
- the pressing indicator portion (40), for axially fixing the pressing sleeve (16) relative to the pressing tool (26) during deformation of the pressing sleeve (16), comprises a guiding recess (44) for receiving a guiding protrusion (48) of the pressing tool (26) and/or a guiding protrusion (48) for being received in a guiding recess (44) of the pressing tool (26), wherein
- the pressing indicator portion (40) can be severed by the pressing tool (26) during deformation of the pressing sleeve (16) from the contact element (30) in such a manner that the contact element (30) remains on the pressing sleeve (16),
- the pressing indicator portion (40) is essentially U-shaped and comprises two legs (50) projecting from the contact surface (34) as well as a base part (52) connecting said legs, the base part (52) in polygonal form consisting of areas (51) having different radial distances from the pressing sleeve (16).

2. The press fitting according to claim 1, **characterized in that** the base part (52) consists of the areas (51) in a structure which is similar to the letter W.

3. The press fitting according to claim 1 or 2, **characterized in that** the pressing indicator portion (40) comprises an inclined surface (43) on its outer side facing away from the pressing sleeve (16), the pressing tool (26) for contacting the contact element (30) being axially movable over said inclined surface.

4. The press fitting according to any of the claims 1 to 3, **characterized in that** the guiding recess (44) is realized as a notch (46) and the notch (46) defines a predetermined breaking point for severing the pressing indicator portion (40) or a part thereof by the pressing tool (26) during deformation of the pressing sleeve (16).

5. The press fitting according to any of the claims 1 to 4, **characterized in that** the pressing indicator portion (40) is resiliently deformed while in a state of being pressed against the pressing sleeve (16), and is automatically restorable when the pressing sleeve (16) is being removed.

6. The press fitting according to any of the claims 1 to 5, **characterized in that** the areas (51) having different radial distances from the pressing sleeve (16) are all radially spaced from the pressing sleeve (16).

7. The press fitting according to any of the claims 1 to 6, **characterized in that** a guiding recess (44) is provided in each of the legs (50).

8. The press fitting according to any of the claims 1 to 7, **characterized in that** the areas (51) having different radial distances from the pressing sleeve (16) are arranged within the base part (52) of the pressing indicator portion (40).

9. The press fitting according to any of the claims 1 to 8, **characterized in that** the base part (52) can be pressed in flat configuration against the pressing sleeve by means of the pressing tool (26) in such a manner that the base part (52) can move back from the outer side (42) of the pressing sleeve (16) by an elastic restoring force.

10. The press fitting according to any of the claims 1 to 9, **characterized in that** the contact element (22) is realized as a contact ring (30) comprising the contact surface (34).

## Revendications

1. Raccord à compression pour un tuyau, en particulier un tuyau en plastique ou un tuyau en matériau composite plastique/métal, comprenant
- un corps de raccord (12) qui présente un manchon d'appui (14) sur lequel une extrémité d'un tuyau à raccorder (20) peut être emmanchée,
- un manchon de compression (16) qui est déformable plastiquement pour presser contre le manchon d'appui (14) une extrémité d'un tuyau (20) à raccorder emmanchée sur le manchon d'appui (14),
- un élément de contact (30) sur le manchon de compression (16), comportant une surface de contact (34) pour l'entrée en contact par un outil de compression (26) en vue de la déformation plastique du manchon de compression (16) et
- au moins une section de marquage de compression (40) détachable et saillant de la surface de contact (34) de l'élément de contact (30) et qui s'étend extérieurement sur le manchon de compression (16) jusque dans une zone d'action (38) à l'intérieur de laquelle l'outil de compression (26) entoure le manchon de compression (16) lors de sa déformation,
sachant que
- la section de marquage de compression (40) présente une cavité de guidage (44) destinée à recevoir une saillie de guidage (48) de l'outil de compression (26) et/ou une saillie de guidage (48) destinée à être reçue dans une cavité de guidage (44) de l'outil de compression (26) afin d'arrêter axialement le manchon de compression (16) par rapport à l'outil de compression (26) lors de la déformation du manchon de compression (16), sachant que
- la section de marquage de compression (40) est détachable de l'élément de contact (30) par l'outil de compression (26) lors de la déformation du manchon de compression (16) de telle manière que l'élément de contact (30) reste sur le manchon de compression (16),
- la section de marquage de compression (40) est sensiblement en forme de U et présente deux branches (50) saillant de la surface de contact (34) et une partie de base (52) les reliant, et la partie de base (52) est composée de zones (51) se trouvant radialement à des distances différentes du manchon de compression (16) en forme polygonale.

2. Raccord à compression selon la revendication 1, **caractérisé en ce que** la partie de base (52) est composée des zones (51) selon une structure similaire à une lettre W.

3. Raccord à compression selon la revendication 1 ou 2, **caractérisé en ce que** la section de marquage de compression (40) présente, sur son côté extérieur opposé au manchon de compression (16), une surface oblique (43) sur laquelle l'outil de compression (26) peut se déplacer axialement pour l'entrée en contact de l'élément de contact (30).

4. Raccord à compression selon l'une des revendications 1 à 3, **caractérisé en ce que** la cavité de guidage (44) est constituée comme encoche (46) et **en ce que** l'encoche (46) forme un point de rupture théorique en vue de la séparation de la section de marquage de compression (40) ou d'une partie de celle-ci par l'outil de compression (26) lors de la déformation du manchon de compression (16).

5. Raccord à compression selon l'une des revendications 1 à 4, **caractérisé en ce que** la section de marquage de compression (40) est déformée élastiquement lorqu'elle se trouve appuyée contre le manchon de compression (16) et reprenne d'elle-même sa forme initiale en se détachant du manchon de compression (16).

6. Raccord à compression selon l'une des revendications 1 à 5, **caractérisé en ce que** les zones (51) se trouvant radialement à des distances différentes du manchon de compression (16) sont toutes disposées à distance radiale du manchon de compression (16).

7. Raccord à compression selon l'une des revendications 1 à 6, **caractérisé en ce qu'**une cavité de guidage (44) est constituée dans chaque branche (50).

8. Raccord à compression selon l'une des revendications 1 à 7, **caractérisé en ce que** les zones (51) se trouvant radialement à des distances différentes du manchon de compression (16) sont disposées à l'intérieur de la partie de base (52) de la section de marquage de compression (40).

9. Raccord à compression selon l'une des revendications 1 à 8, **caractérisé en ce que** la partie de base (52) puisse être appuyée à plat contre le manchon de compression au moyen de l'outil de compression (16) de telle manière que la partie de base (52) soit détachable de la face extérieure (42) du manchon de compression (16) moyennant une force de rappel élastique.

10. Raccord à compression selon l'une des revendications 1 à 9, **caractérisé en ce que** l'élément de contact (22) est constitué comme bague de contact (30) qui présente la surface de contact (34).
